# EUROPÄISCHE PATENTSCHRIFT

(11) **EP 0 987 133 B1**
(45) Veröffentlichungstag und Bekanntmachung des Hinweises auf die Patenterteilung: **25.05.2005**
(21) Anmeldenummer: 99117624.9
(22) Anmeldetag: 07.09.1999
(51) Int. Cl.: B60H 1/00

(54) **Anordnung zum Regeln der Innenraumtemperatur im Fahrgastraum eines Kraftfahrzeuges**
Device for regulating the interior temperature of a motor vehicle
Dispositif pour le réglage de la température intérieure d'un habitacle d'un véhicule automobile

(30) Priorität: 29.10.1998 DE 19849812; 18.09.1998 DE 19842925
(43) Veröffentlichungstag der Anmeldung: 22.03.2000
(73) Patentinhaber: Siemens Aktiengesellschaft, 80333 München (DE)
(72) Erfinder: Hinterwäller, Dieter, 55122 Mainz (DE); Jung, Jörg, 35415 Pohlheim (DE)

(56) Entgegenhaltungen:
- DE-A- 3 821 743
- DE-A- 19 801 028
- DE-A- 19 801 036
- US-A- 5 331 825
- US-A- 5 518 176
- US-A- 5 695 283
- PATENT ABSTRACTS OF JAPAN vol. 005, no. 127 (M-083), 15. August 1981 (1981-08-15) -& JP 56 063510 A (NIPPON DENSO CO LTD), 30. Mai 1981 (1981-05-30)

## Beschreibung

Die Erfindung betrifft eine Anordnung zum Regeln der Innenraumtemperatur im Fahrgastraum eines Kraftfahrzeuges nach dem Oberbegriff des Anspruchs 1. Eine derartige Anordnung ist aus der DE 198 01 036 Al und der US 5,518,176 bekannt.

Die auf ein Kraftfahrzeug auftreffende Wärmestrahlung ist, sofern sie von der Einstrahlung der Sonne herrührt, in der Regel bedingt durch den Stand der Sonne ungleichmäßig verteilt. Dies hat zur Folge, dass sich der Fahrgastraum des Kraftfahrzeuges unterschiedlich stark erwärmt. Auch die sich darin befindlichen Insassen werden von der emittierten Sonnenstrahlung unterschiedlich stark betroffen.

Um diese in vertikaler und horizontaler Ebene ungleichmäßige Verteilung der Strahlungsmenge der Sonne zu erfassen, werden derzeit Solarsensoren eingesetzt, die durch ihren Aufbau in vier Quadranten die Richtung der eintreffenden Lichtstärke bestimmen. Diese Lichtstärke dient dann als Maß für die tatsächliche Sonneneinstrahlung.

Die von dem Solardetektor gelieferten Werte werden genutzt, um das Innentemperatursignal, welches von einem NTC- oder PTC-Element geliefert wird, zu korrigieren und somit die tatsächliche Innenraumtemperatur in einzelnen Bereichen des Fahrgastraumes festzustellen.

Der Erfindung liegt die Aufgabe zugrunde, eine bauliche Ausgestaltung der Anordnung anzugeben, welche eine schnelle Erfassung der tatsächlichen Innenraumtemperatur für räumlich abgegrenzte Zonen im Kraftfahrzeug in vorteilhafter Weise ermöglicht.

Erfindungsgemäß wird die Aufgabe durch die kennzeichnenden Merkmale des Anspruchs 1 gelöst.

Die Erfindung hat den Vorteil, dass mittels einer einzigen Messung die tatsächliche Innenraumtemperatur eines gezielten Bereiches, zum Beispiel der Zone der Sitzposition des Fahrers oder die Zone der Sitzposition des Beifahrers, erfasst werden kann. Dadurch wird die Wirkung des Einflusses der Sonnenstrahlen unmittelbar miterfasst. Eine zusätzliche Messung mittels eines Solarsensors entfällt. Auf den Solarsensor wird somit vollständig verzichtet.

Vorteilhafterweise erfolgt eine sehr schnelle Erfassung von Temperaturänderungen, da Infrarotdetektoren im Stande sind, mit einem, der eingestrahlten Infrarotstrahlung proportionalen Ausgangssignal in Millisekundenbereich zu antworten. Auf Grund der vorliegenden Erfindung werden mit einem einzigen Sensor sowohl die Innenraumtemperatur als auch die von der Sonne hervorgerufenen, unterschiedlichen Temperaturbeeinflussungen gemessen. Lüftermotoren, wie sie bisher notwendig waren, um die Innenraumtemperatur einem NTC-Element zuzuführen, entfallen und somit auch die Geräuschbelästigung durch diesen im Fahrzeuginnenraum.

Erfindungsgemäß sind für die Ausmessung der einzelnen räumlich abgegrenzten Bereiche des Kraftfahrzeuges die Infrarotsensoren in einem Sensorgehäuse angeordnet, wobei das Sensorgehäuse durch ein winklig ausgebildetes Infrarotstrahlungsfilter abgeschlossen ist, wobei jede Teilfläche des winklig ausgebildeten Infrarotstrahlungsfilters einer im Sensorgehäuse angeordneten sensitiven Fläche des Strahlungssensors zugeordnet ist.

Das Infrarotfilter, welches dazu dient, die einfallende Strahlung auf denjenigen Bereich des infraroten Spektrums zu begrenzen, bei dem der Sensor ein Maximum an Empfindlichkeit hat, bündelt somit die einfallende Strahlung.

In einer Ausgestaltung ist die sensitive Fläche durch ein Thermopileelement gebildet, welches einer Teilfläche des Infrarotstrahlungsfilter zugeordnet ist, wobei dem Thermopileelement ein Temperaturreferenzelement zugeordnet ist, und die von dem Thermopileelement und dem Temperaturreferenzelement erzeugten elektrischen Signale an die Regelschaltung geführt sind. Bei der Verwendung eines Mikroprozessors als Auswerteschaltung wird sowohl das Sensorsignal als auch das Referenzsignal von diesem ausgewertet, wobei der Mikrorechner eine digitale Kompensation des Temperatursignals vollzieht. Bei dieser Anordnung sind der Sensor und die Auswerteschaltung räumlich von einander getrennt, aber beide auf derselben Leiterplatte angeordnet.

Das Sensorgehäuse ist dabei auf einer die Regelschaltung tragenden Leiterplatte angeordnet, wobei die sensitiven Flächen der Strahlungssensoren die Wärmestrahlen detektierten, welche auf eine dem Fahrzeuginnenraum zugewandten Außenfläche eines die Leiterplatte umschließenden Gehäuses auftrifft. Aufgrund dieser Anordnung kann auf den Lüftermotor vollständig verzichtet werden. Neben dem Lüftermotor entfallen auch das Lüftungsgitter und der Lüftungsstutzen. Die im Wageninneren vorherrschende Luftverteilung muß nicht mehr an die sensitive Fläche des Temperatursensors herangeführt werden.

Die auf die Außenfläche des die Leiterplatte umschließenden Gehäuses auftreffende Wärmestrahlung wird über das in die Außenfläche integrierte Strahlungsfilter erfaßt und auf die sensitive Fläche des Strahlungssenors weitergeleitet.

Vorteilhafterweise ist das Infrarotstrahlungsfilter des Strahlungssensors einstückig mit der Außenfläche des die Leiterplatte umschließenden Gehäuses ausgebildet.

Wenn die räumliche Anordnung der Sensoren keinen direkten optimalen Blickwinkel auf die sensitive Fläche ermöglicht, ist die von den einzelnen Bereichen abgegebene Wärmestrahlung über eine Spiegeloptik fokusiert und auf die Öffnung des Sensorgehäuses umgelenkt, welches mit dem Infrarotfilter verschlossen ist und hinter welchem sich die sensitive Fläche verbirgt.

Vorteilhafterweise ist ein weiteres, mindestens zwei Infrarotstrahlungssensoren aufweisendes Sensorgehäuse im hinteren Fahrzeuginnenraum montiert.

Unter Wegfall des konventionellen Solarsensors und bei der Verwendung von Infrarotstrahlungs-Detektoren kann der Innenraum des Kraftfahrzeugs in mehrere Zonen, insbesondere in vier Zonen unterteilt werden, die sich durch ihre unterschiedliche Temperaturverteilung voneinander unterscheiden.

Mehrere installierte Sensoren schauen entsprechend ihrem gewählten Blickwinkel in diese Zonen und messen die darin vorherrschende Temperaturverteilung einzeln für jeden Bereich mit einem durch die Spiegeloptik definierten Erfassungsbereich. Dadurch ist es möglich, entsprechend der erfaßten räumlichen Temperaturverteilung für jede einzelne Zone frei wählbar automatisch eine Temperaturregelung zu gewährleisten. Die Messung der Zonentemperatur beschränkt sich auf Objekte, die einen für die zu messende Funktion geeigneten Emissionsgrad besitzen. Es gibt auch die Möglichkeit, die Temperatur über die gesamte Zone zu bestimmen, indem eine Integration über segmentierte Elemente einer Fläche erfolgt, die die gedachte Temperaturzone in ihrer geometrischen Ausdehnung begrenzen und deren Abbild sich auf der sensitiven Fläche des Detektors widerspiegelt.

In einer Ausgestaltung ist die Innenflächentemperatur der Kraftfahrzeugscheiben zu messen, um daraus den transmittierenden Anteil der auftreffenden Infrarotstrahlung zu bestimmen.

In einer Abwandlung kann die menschliche Hautaußentemperatur gemessen werden, um die subjektive Temperaturbefindlichkeit des Individuums zu bestimmen.

Vorteilhafterweise ist der Infrarotsensor im Dachhimmel des Kraftfahrzeuges angeordnet.

Es ist von besonderem Vorteil, wenn die Regeleinrichtung gleichzeitig die gesamte Heizungs- Lüftungs- und Klimasteuerung des Kraftfahrzeuges wahrnimmt. Dabei sind auf einer oder mehreren Leiterplatten elektronische Schaltungen angeordnet, die zusammen eine Funktionseinheit bilden. Diese werden verwendet, um die Signalerzeugung, die Signalauswertung und die Steuerung einer Heizungs- und/oder einer Klimaanlage eines Kraftfahrzeuges durchzuführen. Integriert in diese elektronischen Schaltkreise ist eine Auswerteschaltung, mit der die Nutzspannungssignale und die Referenzsignale der Infrarotdetektoren miteinander elektrisch verknüpft sind. Dabei wird die Schwankung der Ausgangssignale der Detektoren, die durch eine sich ändernde Umgebungstemperatur verursacht wird, kompensiert. Dieser Ausgleichvorgang der Auswerteschaltung kann entweder analog oder digital mit dem Mikroprozessor erfolgen.

Die Erfindung läßt zahlreiche Ausführungsmöglichkeiten zu. Eine davon soll anhand der in der Zeichnung dargestellten Figuren näher erläutert werden.

Es zeigt:
- Figur 1:: Klimagerät eines Kraftfahrzeuges
- Figur 2:: Mehrzonenerfassung im Kraftfahrzeug
- Figur 3:: Erste Ausführungsform der erfindungsgemäßen Anordnung
- Figur 4:: Zweite Ausführungsform der erfindungsgemäßen Anordnung
- Figur 5:: Blockschaltbild der Innentemperaturregelung

Gleiche Merkmale sind mit gleichen Bezugszeichen gekennzeichnet.

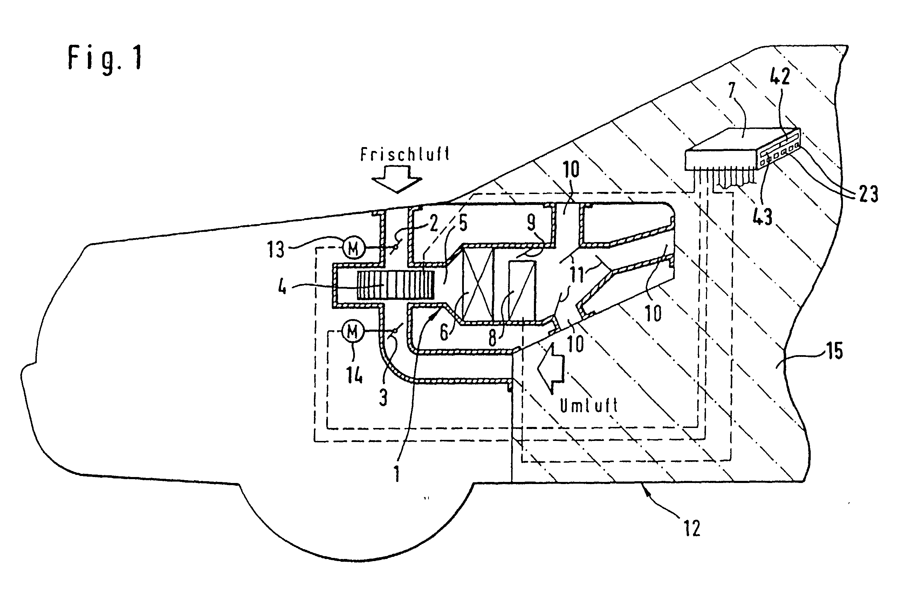

In Figur 1 ist das Klimagerät 1 eines Kraftfahrzeuges 12 in seiner konkreten Anordnung im Kraftfahrzeug dargestellt.

Über die Frischluftklappe 2, deren Stellung von einem Stellmotor 13 in Abhängigkeit von elektrischen Signalen gesteuert wird, die vom Klimasteuergerät 7 ausgegeben werden, wird Frischluft aus der Umgebung des Fahrzeuges in das Kraftfahrzeug 12 angesaugt.

Die Umluft aus dem Fahrgastraum des Kraftfahrzeuges wird über die Umluftklappe 3 vom Klimagerät 1 angesaugt. Auch die Stellung der Umluftklappe 3 wird in Abhängigkeit von elektrischen Signalen des Klimasteuergerätes 7 über einem Stellmotor 14 gesteuert. Über den Ventilator 4, dessen Geschwindigkeit durch das Klimasteuergerät 7 eingestellt wird, werden Um- und Frischluft in das Klimagerät 1 gefördert, wodurch hinter dem Ventilator 4 Mischluft 5 entsteht. Diese Mischluft 5 wird dem Verdampfer 6 zugeführt.

Im Kühlbetrieb wird die Mischluft 5 über Ausströmer 10 an den Fahrgastraum 15 abgegeben. Diese Ausströmer 10 sind in Kanälen angeordnet, die in Richtung Windschutzscheibe, in Richtung Fahrer bzw. Beifahrer und in Richtung des Fußbereiches des Fahrers bzw. Beifahrers weisen. Mittels der in den einzelnen Kanälen angeordneten Luftverteilerklappen 11, kann der Lufteintritt von Fahrer bzw. Beifahrer reguliert werden.

An den Verdampfer 6 schließt sich ein Wärmetauscher 8 an. Die vom Verdampfer 6 abgegebene Luftmenge wird mit Hilfe einer Temperaturklappe 9 am Wärmetauscher 8 vorbeigeführt und dabei erwärmt. Im Heizbetrieb strömt dann die entsprechend temperierte Mischluft in den Fahrgastraum 15.

Das Klimasteuergerät 7 ist üblicherweise im oder in der Nähe des Armaturenbrettes des Fahrzeuges 12 angeordnet, so daß es problemlos vom Fahrer und Beifahrer während der Fahrt bedient werden kann.

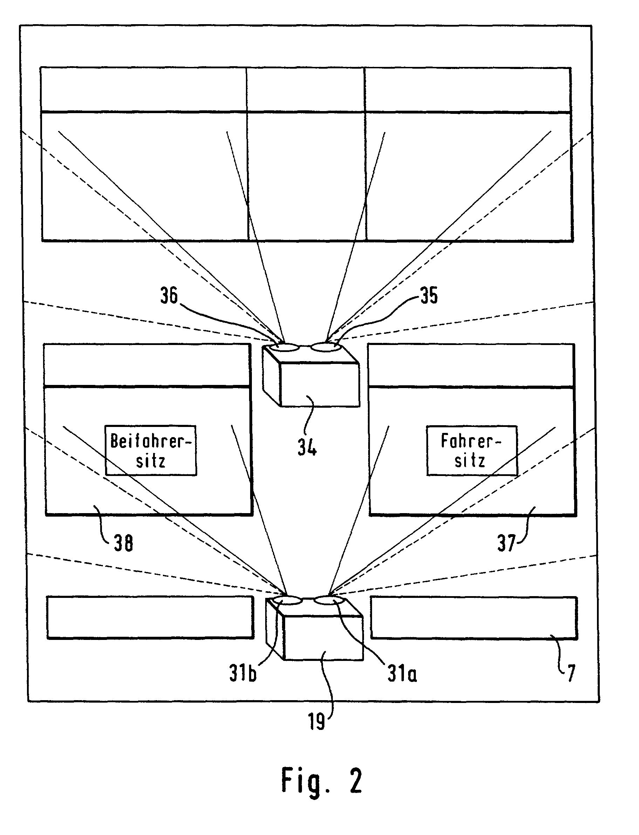

Die Mehrzonenerfassung im Kraftfahrzeug ist in Figur 2 dargestellt. Im Klimasteuergerät 7 des Kraftfahrzeuges sind zwei Infrarotsensoren in einem Sensorgehäuse 19 angeordnet. Die Sensoren sind in Figur 2 durch je eine sensitive Fläche 31a, 31b dargestellt. Jede sensitive Fläche 31a, 31b ist einem bestimmten Bereich im Kraftfahrzeuginnenraum zugeordnet. So erfaßt die erste sensitive Fläche 31a den Bereich 37 des Fahrersitzes, während die zweite sensitive Fläche 31 b den Bereich 38 des Beifahrersitzes erfaßt.

Um auch die Temperaturverhältnisse im Bereich der Fahrzeuginsassen genau bestimmen zu können, welche sich auf dem Rücksitz befinden, ist ein zweites Infrarotsensoren enthaltendes Sensorgehäuse 34 entweder in einem rückwärtigen Bediengerät oder dem Dachhimmel des Kraftfahrzeuges angeordnet. Auch hier sind zwei Strahlungssensoren enthalten, wobei die sensitive Fläche 35 des ersten Sensors den Bereich hinter dem Fahrersitz in Richtung Heckscheibe detektiert, während die zweite sensitive Fläche 36 den Bereich zwischen dem Beifahrersitz und der Heckscheibe untersucht.

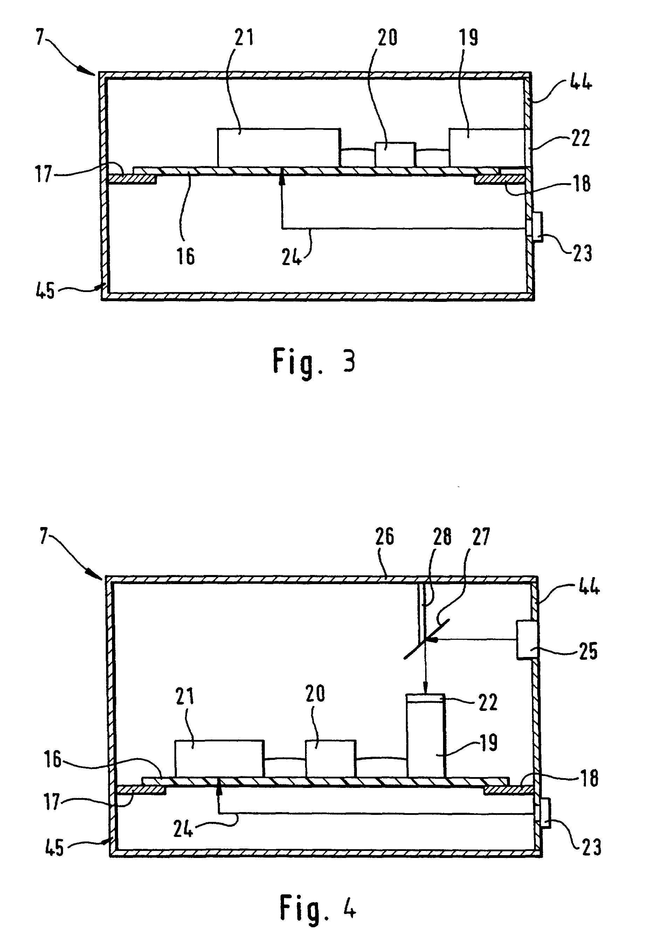

Die Anordnung des Sensorgehäuses 19 im Klimasteuergerät 7 ist in den Figuren 3 und 4 dargestellt.

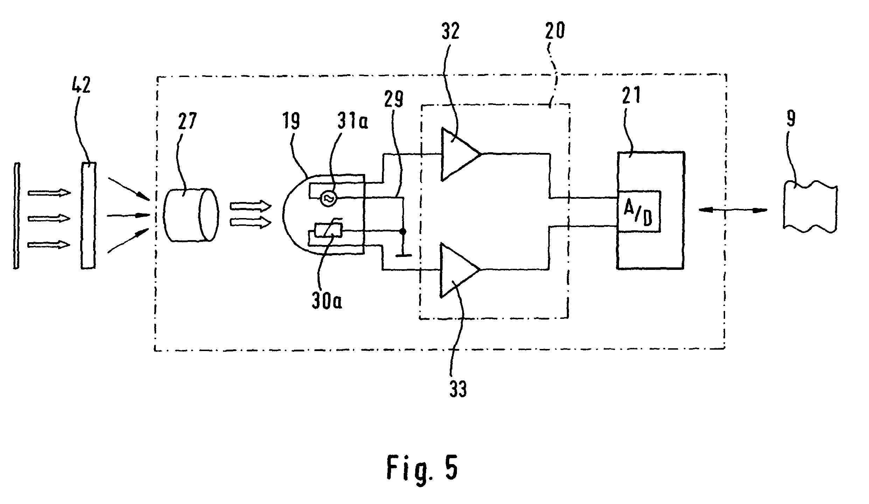

In Figur 3 ist in einem Gehäuse 45 an den Halterungen 17 und 18 eine Leiterplatte 16 befestigt, auf welcher das die Infrarotsensoren enthaltende Sensorgehäuse 19, eine Verstärkeranordnung 20 und ein Mikroprozessor 21 angeordnet sind. Jeder Infrarotsensor ist elektrisch mit der Verstärkerschaltung 20 verbunden, welche wiederum an den Mikroprozessor 21 führt. (Figur 5)

An der Frontplatte 44 des Gehäuses 45 ist in eine nicht weiter dargestellte Öffnung ein erstes Infrarotfilter 22 eingelassen, welches den Abschluß des Sensorgehäuses 19 bildet. Weiterhin sind an der Frontplatte 44 Bedienelemente 23 angeordnet, mit denen der Fahrer bzw. der Beifahrer seinen Temperaturwunsch eingeben kann. Bei Betätigung eines Bedienelementes 23 wird ein elektrisches Signal über die elektrische Leitung 24 an den Mikroprozessor 21 gesendet. Die vom Fahrzeuglenker oder -beifahrer gewünschte Innenraumtemperatur bewertet der Mikroprozessor 21 als Sollwertvorgabe.

Wie aus Figur 1 ersichtlich, weist das Infrarotfilter 22 mehrere Bereiche 42, 43 auf, die im Winkel zueinander stehen und einerseits die Temperatur im Fahrerbereich 37 und andererseits im Beifahrerbereich 38 messen. Somit kann das subjektive Wärmebefinden der Insassen im Fahrgastraum 15 für jede Person gesondert ermittelt und eingestellt werden. Die daraus resultierende Reaktion des Heizungs- und Klimasteuergerätes 7 kann sowohl zu einer Änderung im Gesamtbereich der Insassen, als auch zu einer Änderung jeweils in den betroffenen Bereichen der einzelnen Insassen führen.

Im vorliegenden Falle der Regelung der Innenraumtemperatur wird durch die Bereiche 42, 43 des Infrarotfilters 22 die auf die Frontplatte 44 des Klimagerätes 7 auftreffende Wärmestrahlung aus dem Fahrer- bzw. Beifahrerbereich detektiert und der gefilterte Bestandteil der Wärmestrahlung von den Infrarotsensoren ausgewertet. Das der aktuellen Innenraumtemperatur im Fahrer- und Beifahrerbereich entsprechende Sensorsignal wird durch den Verstärker 20 verstärkt und als Signal dem Mikroprozessor 21 zugeführt.

Der Mikroprozessor vergleicht den Sollwert mit der tatsächlich eingegebenen Temperatur und steuert in Abhängigkeit der Differenz zwischen beiden Werten die in Figur 1 dargestellte Umluft- und/oder Frischluftklappe 2 und 3 an, um so eine Temperatur einzustellen, die vom Fahrzeugfahrer oder Beifahrer gewünscht wird.

In Figur 4 ist eine weitere Ausführung der erfindungsgemäßen Lösung dargestellt. Sie unterscheidet sich von der Anordnung in Figur 3 dadurch, daß die Sensorelemente 31a, 31b mit ihrem gemeinsamen, annähernd eben ausgebildeten Infrarotfilter 22 so auf der Leiterplatte 16 angeordnet sind, daß das Infrarotfilter 22 parallel zur Oberfläche der Leiterplatte 16 verläuft. In die Frontplatte 44 ist ein zweites, winkelig ausgebildetes Infrarotfilter 25 eingelassen, welches die auftreffende Wärmestrahlung wirkungsmäßig fokusiert. An der Abdeckung 26 des Klimasteuergerätes 7 ist über eine Halterung 28 eine Spiegeloptik 27 angeordnet. Diese Spiegeloptik 27 lenkt die durch das Infrarotfilter 25 hindurch gelassene Strahlung um und richtet sie auf das Infrarotfilter 22 der sensitiven Flächen 31a, 31b. Diese Anordnung ist besonders dann günstig, wenn der Sensor 19 aufgrund der räumlichen Gegebenheiten des Klimasteuergerätes 7 nicht direkt in die Frontplatte 44 eingelassen werden kann.

Die Infrarotfilter 22, 25 bestehen aus Materialien mit einem hohen Transmissionsgrad im Bereich des infraroten Spektrums, wie beispielsweise Silizium oder einer Kunststoffverbindung. Dabei übliche Wellenlängen, die von dem Infrarotfilter durchgelassen werden, liegen im Bereich von 4 bis 10 Mikrometer.

Insbesondere bei der Verwendung von Kunststoffen bietet es sich an, die Frontplatte 44 und das Infrarotfilter 22 (Figur 3) bzw. das Infrarotfilter 25 (Figur 4) einstückig auszubilden. Es ist somit direkt Fläche des Klimasteuergerätes 7.

In Figur 5 ist die elektrische Schaltung der vorliegenden Erfindung dargestellt. Die aus Richtung Fahrersitz ausgehende Wärmestrahlung wird über den Bereich 42 des Infrarotfilters 22 und die Spiegeloptik 27 auf die sensitive Fläche 31a des ersten Infrarotsensors geleitet. Der Infrarotsensor 19 besteht aus einem, die sensitive Fläche 31a bildenden Thermopileelement, welches die Temperatur bestimmt. Neben dem Thermopileelement 31a ist ein Referenzelement 30a angeordnet, daß aufgrund seiner räumlichen Nähe die Referenztemperatur des kalten Thermoschenkels 29 des Thermopileelementes 31a und somit der Wärmesenke bestimmt. Die sich anschließende Verstärkerschaltung 20 weist dabei zwei Verstärkerzweige auf.

Die Sensorausgänge des Thermopileelementes 31 a sind dabei einmal an Masse und einmal an den Operationsverstärker 32 geschaltet, während ein Sensorausgang des Referenzelementes 30a mit dem kalten Schenkel 29 des Thermopileelements 31 verbunden ist, welches an Masse führt. Der zweite Anschluß des Referenzelementes 30 ist mit einem zweiten Operationsverstärker 33 verbunden. Die Ausgänge der Operationsverstärker 32 und 33 sind mit dem A/D-Wandlereingang des Mikroprozessor 21 verbunden. Mittels des Mikroprozessors 21 erfolgt eine digitale Kompensation des Temperatursignales. Wie bereits beschrieben, steuert der Mikroprozessor 21 in Abhängigkeit eines Vergleiches der gemessenen Innentemperatur mit der gewünschten Innenraumtemperatur ein Stellelement, beispielsweise die Mischluftklappe 9 an.

Der Sensor sowie die benötigte Auswerte- und Kompensationsschaltung befindet sich direkt auf der Leiterplatte des Klimagerätes und ist somit integraler Bestandteil der gesamten Heizungs-, Lüftungs- und Klimagerätesteuerung.

### Bezugszeichenliste

- 1.: Klimagerät
- 2.: Frischluftklappe
- 3.: Umluftklappe
- 4.: Ventilator
- 5.: Mischluft
- 6.: Verdampfer
- 7.: Klimasteuergerät
- 8.: Wärmetauscher
- 9.: Temperaturklappe
- 10.: Ausströmer
- 11.: Luftverteilerklappen
- 12.: Kraftfahrzeug
- 13.: Stellmotor
- 14.: Stellmotor
- 15.: Fahrgastraum
- 16.: Leiterplatte
- 17.: Halterung
- 18.: Halterung
- 19.: a, b Sensorgehäuse
- 20.: Verstärkeranordnung
- 21.: Mikroprozessor
- 22.: Infrarotfilter
- 23.: Bedienelement
- 24.: elektrische Leitung
- 25.: Infrarotfilter
- 26.: Abdeckung des Gehäuses
- 27.: Spiegeloptik
- 28.: Halterung
- 29.: kalter Thermoschenkel vom Thermopilelement
- 30.: Referenzelement
- 31.: Thermopilelement
- 32.: Operationsverstärker
- 33.: Operationsverstärker
- 34.: zweites Gehäuse
- 35.: sensitive Fläche des 2. Gehäuses
- 36.: sensitive Fläche des 2. Gehäuses
- 37.: Fahrerbereich
- 38.: Beifahrerbereich
- 42.: Bereich des Infrarotfilters 25
- 43.: Bereich des Infrarotfilters 25
- 44.: Frontplatte
- 45.: Gehäuse

## Patentansprüche

1. Anordnung zum Regeln der Innenraumtemperatur im Fahrgastraum (15) eines Kraftfahrzeuges, bei welcher die von mindestens zwei Infrarotstrahlungssensoren (31a, 31b) detektierte tatsächliche Innenraumtemperatur einer Regelschaltung zugeführt wird, welche in Abhängigkeit der gemessenen Temperatur und einer vorgegebenen Temperatur die Innenraumtemperatur im Fahrgastraum (15) einstellt, wobei die mindestens zwei Infrarotstrahlungssensoren (31a, 31b) zur Erfassung eines Temperaturgradienten im Fahrgastraum (15) so nebeneinander angeordnet sind, dass die sensitive Fläche (31a, 31b) jedes Strahlungssensors die Wärmestrahlung eines vorgegebenen Bereiches (35, 36, 37, 38) des Fahrgastraumes (15) des Kraftfahrzeuges (1) detektiert, **dadurch gekennzeichnet, dass** die Strahlungssensoren in einem Sensorgehäuse (19) angeordnet sind, wobei das Sensorgehäuse (19) durch ein winklig ausgebildetes Infrarotstrahlungsfilter (22) abgeschlossen ist, wobei jede Teilfläche (42, 43) des winklig ausgebildeten Infrarotstrahlungsfilters (22) einer im Sensorgehäuse (19) angeordneten sensitiven Fläche (31a, 31b) der Strahlungssensoren zugeordnet ist.

2. Anordnung nach Anspruch 1, **dadurch gekennzeichnet, dass** ein Thermopileelement eine sensitive Fläche (31a, 31b) bildet, die einer Teilfläche (42, 43) des Infrarotstrahlungsfilters (22) zugeordnet ist, und dem Thermopileelement (31a, 31b) ein Temperaturreferenzelement (30a, 30b) zugeordnet ist, wobei die von dem Thermopileelement (31a, 31b) und dem Temperaturreferenzelement (30a, 30b) erzeugten elektrischen Signale an die Regelschaltung (21) geführt sind.

3. Anordnung nach einem der vorhergehenden Ansprüche 1 und 2, **dadurch gekennzeichnet, dass** das Sensorgehäuse (19) auf einer die Regelschaltung (21) tragenden Leiterplatte (16) angeordnet ist, und dass die sensitiven Flächen (31a, 31b) die Wärmestrahlen detektieren, welche auf eine dem Fahrzeuginnenraum (15) zugewandte Außenfläche (44) eines die Leiterplatte (16) umschließenden Gehäuses (45) auftrifft.

4. Anordnung nach Anspruch 3, **dadurch gekennzeichnet, dass** das Strahlungsfilter (22, 25) in die Außenfläche (44) des die Leiterplatte (16) umschließenden Gehäuses (45) integriert ist.

5. Anordnung nach Anspruch 4, **dadurch gekennzeichnet, dass** das Infrarotstrahlungsfilter (22, 25) einstückig mit der Außenfläche (44) des die Leiterplatte (16) umschließenden Gehäuses (45) ausgebildet ist.

6. Anordnung nach Anspruch 5, **dadurch gekennzeichnet, dass** eine Wärmestrahlungsspiegeloptik (27) die Wärmestrahlung der Erfassungsbereiche (35, 36; 37, 38) des Kraftfahrzeuges (1) auf die Öffnung des Sensorgehäuses (19) umlenkt, welches mit dem Infrarotfilter (22) verschlossen ist, hinter welchem sich die sensitive Fläche (31a, 31b) verbirgt.

7. Anordnung nach einem der vorhergehenden Ansprüche, **dadurch gekennzeichnet, dass** ein weiteres, mindestens zwei Infrarotsensoren enthaltendes Gehäuse (34) im hinteren Fahrzeuginnenraum montiert ist.

8. Anordnung nach Anspruch 7, **dadurch gekennzeichnet, dass** das zweite Sensorgehäuse (34) im Dachhimmel des Kraftfahrzeuges (1) angeordnet ist.

9. Anordnung nach Anspruch 1, **dadurch gekennzeichnet, dass** die Regelschaltung (21) die gesamte Heizungs-, Lüftungs- und Klimasteuerung des Kraftfahrzeuges (19) regelt.

## Claims

1. Arrangement for regulating the interior temperature in the passenger compartment (15) of a motor vehicle, in which the actual interior temperature which is detected by at least two infrared radiation sensors (31a, 31b) is fed to a regulating circuit which sets the interior temperature in the passenger compartment (15) as a function of the measured temperature and a predefined temperature, wherein the at least two infrared radiation sensors (31a, 31b) for sensing a temperature gradient in the passenger compartment (15) are arranged next to one another in such a way that the sensitive face (31a, 31b) of each radiation sensor detects the thermal radiation of a predefined region (35, 36, 37, 38) of the passenger compartment (15) of the motor vehicle (1), **characterized in that** the radiation sensors are arranged in a sensor housing (19), wherein the sensor housing (19) is closed off by an infrared radiation filter (22) which is of angular design, wherein each partial face (42, 43) of the infrared radiation filter (22) which is of angular design is assigned to a sensitive face (31a, 31b), arranged in the sensor housing (19), of the radiation sensors.

2. Arrangement according to Claim 1, **characterized in that** a thermopile element forms a sensitive face (31a, 31b) which is assigned to a partial face (42, 43) of the infrared radiation filter (22), and a temperature reference element (30a, 30b) is assigned to the thermopile element (31a, 31b), wherein the electrical signals which are generated by the thermopile element (31a, 31b) and the temperature reference element (30, 30b) are fed to the regulating circuit (21).

3. Arrangement according to one of the preceding Claims 1 and 2, **characterized in that** the sensor housing (19) is arranged on a printed circuit board (16) which supports the regulating circuit (21), and **in that** the sensitive faces (31a, 31b) detect the thermal rays which impinge on an outer face (44), facing the passenger compartment (15) of the vehicle, of a housing (45) which surrounds the printed circuit board (16).

4. Arrangement according to Claim 3, **characterized in that** the radiation filter (22, 25) is integrated into the outer face (44) of the housing (45) which surrounds the printed circuit board (16).

5. Arrangement according to Claim 4, **characterized in that** the infrared radiation filter (22, 25) is of integral design with the outer face (44) of the housing (45) which surrounds the printed circuit board (16).

6. Arrangement according to Claim 5, **characterized in that** a thermal radiation mirrored optical system (27) diverts the thermal radiation of the sensing regions (35, 36; 37, 38) of the motor vehicle (1) onto the opening of the sensor housing (19) which is closed off with the infrared filter (22) behind which the sensitive face (31a, 31b) is concealed.

7. Arrangement according to one of the preceding claims, **characterized in that** a further housing (34), containing at least two infrared sensors, is mounted at the rear of the passenger compartment of the vehicle.

8. Arrangement according to Claim 7, **characterized in that** the second sensor housing (34) is arranged in the roof lining of the motor vehicle (1).

9. Arrangement according to Claim 1, **characterized in that** the regulating circuit (21) regulates the entire heating control, ventilation control and airconditioning control of the motor vehicle (19).

## Revendications

1. Dispositif permettant de réguler la température à l'intérieur de l'habitacle (15) d'un véhicule automobile, où la température effective à l'intérieur de l'habitacle détectée par au moins deux capteurs de rayonnement infrarouge (31a, 31b) est appliquée à un circuit de régulation, qui règle la température à l'intérieur de l'habitacle (15) en fonction de la température mesurée et d'une température prédéterminée, les au moins deux capteurs de rayonnement infrarouge (31a, 31b) étant, pour la détection d'un gradient de température dans l'habitacle (15), disposés l'un à côté de l'autre de telle manière que la surface sensible (31a, 31b) de chaque capteur de rayonnement détecte le rayonnement thermique d'une zone donnée (35, 36, 37, 38) de l'habitacle (15) du véhicule automobile (1 ), **caractérisé par le fait que** les capteurs de rayonnement sont disposés dans un boîtier de capteurs (19), le boîtier de capteurs (19) étant fermé par un filtre de rayonnement infrarouge (22) à forme angulaire, chaque surface partielle (42, 43) du filtre de rayonnement infrarouge (22) à forme angulaire étant affectée à une surface sensible (31 a, 31 b) des capteurs de rayonnement disposée dans le boîtier de capteurs (19).

2. Dispositif selon la revendication 1 **caractérisé par le fait qu'**un élément thermopile forme une surface sensible (31a, 31b) affectée à une surface partielle (42, 43) du filtre de rayonnement infrarouge (22) et qu'un élément de référence de température (30a, 30b) est affecté à l'élément thermopile (31a, 31b), les signaux électriques générés par l'élément thermopile (31a, 31b) et l'élément de référence de température (30a, 30b) étant appliqués au circuit de régulation (21).

3. Dispositif selon l'une des revendications précédentes 1 et 2 **caractérisé par le fait que** le boîtier de capteurs (19) est monté sur une carte à circuits imprimés (16) supportant le circuit de régulation (21) et que les surfaces sensibles (31a, 31b) détectent les rayons thermiques qui tombent sur une surface extérieure (44), orientée vers l'intérieur de l'habitacle (15) du véhicule, d'un boîtier (45) englobant la carte à circuits imprimés (16).

4. Dispositif selon la revendication 3 **caractérisé par le fait que** le filtre à rayonnement (22, 25) est intégré dans la surface extérieure (44) du boîtier (45) englobant la carte à circuits imprimés (16).

5. Dispositif selon la revendication 4 **caractérisé par le fait que** le filtre à rayonnement infrarouge (22, 25) est conçu en une seule pièce avec la surface extérieure (44) du boîtier (45) englobant la carte à circuits imprimés (16).

6. Dispositif selon la revendication 5 **caractérisé par le fait qu'**un système optique (27) à miroirs pour le rayonnement thermique fait dévier le rayonnement thermique des zones de détection (35, 36; 37, 38) du véhicule automobile (1) vers l'ouverture du boîtier de capteurs (19), qui est fermé par le filtre à infrarouge (22) derrière lequel se trouve la surface sensible (31a, 31b).

7. Dispositif selon l'une des revendications précédentes **caractérisé par le fait qu'**un autre boîtier (34) renfermant au moins deux capteurs à infrarouge est monté dans la partie arrière de l'habitable.

8. Dispositif selon la revendication 7 **caractérisé par le fait que** le deuxième boîtier de capteurs (34) est monté dans l'habillement du toit du véhicule automobile (1).

9. Dispositif selon la revendication 1 **caractérisé par le fait que** le circuit de régulation (21) régule toute la commande de chauffage, de ventilation et de climatisation du véhicule automobile (19).
